**Europäisches Patentamt**

**European Patent Office**

**Office européen des brevets**

(19)

(11) Veröffentlichungsnummer: **0 052 321**
**A1**

(12)

# EUROPÄISCHE PATENTANMELDUNG

(21) Anmeldenummer: **81109570.2**

(22) Anmeldetag: **07.11.81**

(51) Int. Cl.³: **F 24 D 3/00**
F 28 F 21/06, F 24 J 3/02

(30) Priorität: **14.11.80 DE 3043045**

(43) Veröffentlichungstag der Anmeldung:
**26.05.82 Patentblatt 82/21**

(84) Benannte Vertragsstaaten:
**AT CH DE FR GB IT LI NL SE**

(71) Anmelder: **METZELER KAUTSCHUK GMBH**
**Westendstrasse 131**
**D-8000 München 2(DE)**

(72) Erfinder: **Becher, Klaus**
**Martin-Luther-Strasse 9**
**D-6120 Michelstadt(DE)**

(74) Vertreter: **Michelis, Theodor, Dipl.-Ing.**
**Westendstrasse 131**
**D-8000 München 2(DE)**

(54) **Wärmetauscherelement aus flexiblem Material.**

(57) Die Erfindung betrifft ein Wärmetauscherelement aus flexiblem Material mit einer Oberbahn und einer Unterbahn aus Kunststoff oder beschichtetem Gewebe, wobei Ober- und Unterbahn auf definierten Abstand zueinander fixiert sind, und bei dem Ober- und Unterbahn (2, 3) an ihren Rändern (4...7) umlaufend und auf ihrer übrigen Fläche zumindest punktförmig (8;16) in vorgegebenen Abständen unmittelbar dauerhaft miteinander verbunden sind.

FIG.1

EP 0 052 321 A1

METZELER KAUTSCHUK GmbH   München, 3.11.1981
MK 407 P 80 EP

Wärmetauscherelement aus flexiblem Material

Die Erfindung betrifft ein Wärmetauscherelement aus flexiblem
Material mit einer Oberbahn und einer Unterbahn aus Kunststoff
oder beschichtetem Gewebe, wobei Ober- und Unterbahn auf definierten Abstand zueinander fixiert sind.

Ein derartiges Element, das beispielsweise auch als Wärmetauscher
verwendet werden kann, ist aus der DE-AS 21 48 401 bekannt. Dabei
sind Ober- und Unterbahn eines beschichteten Gewebes durch parallele Fäden, sogenannte Polfäden, auf Abstand gehalten, so daß
Ober- und Unterbahn genau parallel zueinander verlaufen. Ein derartiges Element gibt zwar einen optimalen Strömungsquerschnitt
für die Wärmetauschermedien, jedoch bedingt seine Herstellung
einen relativ hohen Aufwand, und außerdem weisen derartige Elemente im allgemeinen für den Anwendungszweck als Wärmetauscher
eine zu große Höhe auf, so daß beispielsweise eine Verwendung
als Wärmetauscher für eine Fußbodenheizung, die auf den Fußboden
unter eine Teppichauskleidung gelegt ist, nur schwer möglich ist.

Der Erfindung liegt demgegenüber die Aufgabe zugrunde, ein Wärmetauscherelement zu schaffen, das sich durch geringe Bauhöhe
auszeichnet, das einfach herzustellen und leicht auf seiner Unterlage zu befestigen ist und das trotzdem einen optimalen, für den
jeweiligen Anwendungszweck ausreichenden Wärmetauscheffekt beinhaltet.

Ausgehend von einem Wärmetauscherelement der eingangs genannten
Art ist zur Lösung der gestellten Aufgabe erfindungsgemäß vorgesehen, daß Ober- und Unterbahn an ihren Rändern umlaufend und
auf ihrer übrigen Fläche zumindest punktförmig in vorgegebenen
Abständen unmittelbar dauerhaft miteinander verbunden sind.

Dabei ist es zweckmäßig, wenn die punktförmigen Verbindungsstellen in parallelen Reihen nebeneinander und die Verbindungsstellen einer Reihe versetzt zu der der nächsten Reihe angeordnet sind, um eine gute Durchströmung des Wärmetauscherelementes in allen Bereichen des Elementes sicher zu gewährleisten.

Bei einem Wärmetauscherelement aus gummibeschichtetem Gewebe können dabei Ober- und Unterbahn an den Verbindungsstellen durch Vulkanisation miteinander verbunden sein, wodurch sich eine besonders feste und einfach herzustellende Verbindung ergibt.

Zur Zu- und Abführung des Wärmetauschermediums ist es ferner zweckmäßig, wenn jedes Element an den umlaufenden Rändern mindestens zwei offene Durchbrüche aufweist. Zur besseren Strömungsführung sollen diese zweckmäßig auf jeweils gegenüberliegenden Stirnseiten des Elementes angeordnet sein.

Ein wesentlicher Vorteil dieser erfindungsgemäßen Wärmetauscherelemente besteht darin, daß diese auf einfache Weise an ihren punktförmigen Verbindungsstellen und/oder an den Rändern auf ihre Unterlage angenagelt oder angeschraubt werden können, ohne daß dadurch Lecks im Wärmetauscherelement entstehen.

Zur großflächigen Auskleidung von mit Wärmetauscherelementen zu belegenden Flächen, wie beispielsweise größeren Fußbodenflächen oder Dachflächen, können mehrere Wärmetauscherelemente Stoß an Stoß mechanisch und hydraulisch miteinander verbunden sein.

Anhand einer schematischen Zeichnung sind Aufbau und Wirkungsweise von Ausführungsbeispielen nach der Erfindung näher erläutert. Dabei zeigen

Fig. 1    eine Aufsicht auf ein Wärmetauscherelement bei abgenommener Oberbahn,

Fig. 2    einen Querschnitt durch eine derartiges fertiges Element und

Fig. 3    eine Aufsicht auf eine Wärmetauschermatte, die aus mehreren Einzelelementen zusammengesetzt ist.

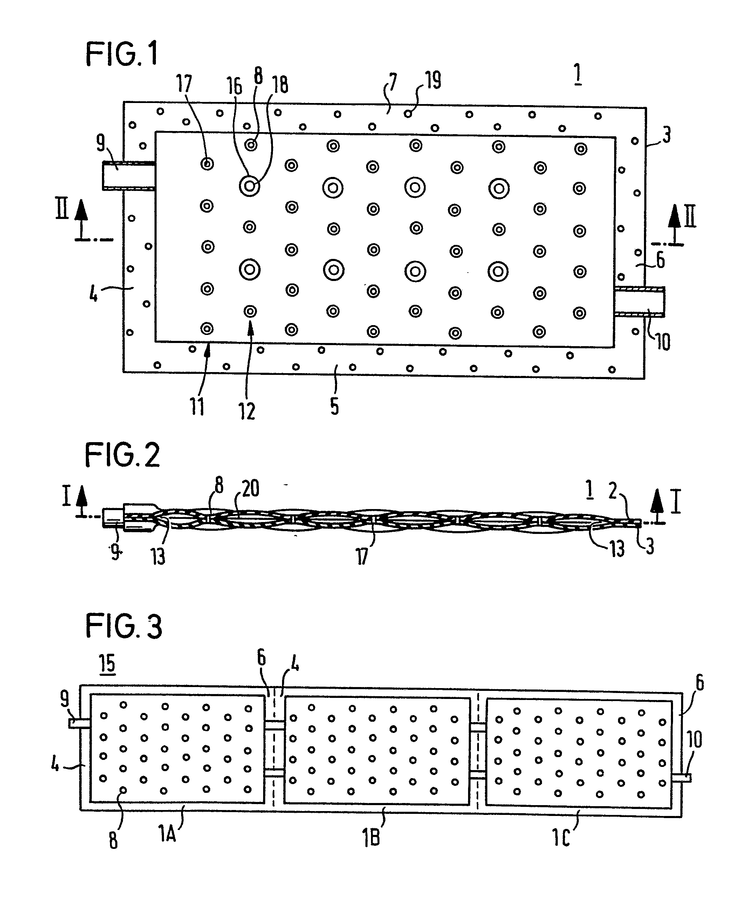

Wie aus den Figuren 1 und 2 zu ersehen ist, besteht ein Wärmetauscherelement 1 aus einer Oberbahn 2 und einer Unterbahn 3 aus flexiblem Material, wei beispielsweise einem Kunststoff oder einem mit Gummi beschichteten Gewebe. Ober- und Unterbahn 2 bzw. 3 sind dabei an ihren äußeren Rändern 4, 5, 6 und 7 sowie an der freien Innenfläche über zumindest punktförmige Verbindungsstellen 8 dauerhaft miteinander verbunden. Diese Verbindung kann durch Kleben oder Schweißen oder bei gummiertem Gewebe am zweckmäßigsten durch Vulkanisieren erfolgen. Jedes Wärmetauscherelement 1 weist dabei - zweckmäßigerweise jeweils an seinen einander gegenüberliegenden Stirnseiten 4 und 6 - je einen Durchbruch mit je einem Anschlußstutzen 9 und einem Abführungsstutzen 10 für die Zu- und Ableitung des Wärmetauschermediums auf.

Nach Herstellung eines derartigen Elementes 1 liegen zunächst Ober- und Unterbahn 2 und 3 flach aufeinander. Wenn nun beispielsweise über einen Stutzen 9 und einen entsprechenden, nicht näher dargestellten Anschluß ein Wärmetauschermedium, wie beispielsweise heißes Wasser, in ein derartiges Element 1 eingeleitet wird, so bläht sich das Element entsprechend dem Druck des Wärmetauschermediums auf, wie das aus dem Querschnitt nach Fig. 2 ersichtlich ist. Wesentlich für die sich ergebende Höhe eines derartigen Elementes ist dabei der jeweilige Abstand der punktförmigen Verbindungsstellen 8, d.h., je weiter diese Verbindungsstellen auseinanderliegen, um so stärker kann sich das Element zwischen den einzelnen Verbindungsstellen aufwölben.

Wenn man also ein besonders flaches Element haben will, das beispielsweise als Fußbodenheizmatte unter einem Teppich in Wohnwagen verwendet werden soll, so wird man einen relativ kleinen Abstand zwischen den einzelnen Verbindungsstellen 8 wählen, um eine unnötige und störende Wölbung des Bodens zu vermeiden.

Bei einem derartigen Anwendungsfall ist es sogar möglich, die Oberseite des Wärmetauscherelementes direkt mit einem teppichähnlichen Flor zu beschichten, um somit einen zusätzlichen Teppich einsparen zu können.

Um eine optimale Strömungsverteilung innerhalb eines Wärmetauscherelementes 1 zu erhalten und einen direkten Strömungsdurchgang von einem Einlaßstutzen 9 zu einem Auslaßstutzen 10 zu vermeiden, ist es zweckmäßig, die einzelnen punktförmigen Verbindungsstellen 8 in parallelen Reihen 11 und 12 nebeneinander anzuordnen und die Verbindungsstellen 8 einer Reihe 12 versetzt zu der der nächsten Reihe 11 anzuordnen. Dadurch können tote Ecken innerhalb eines Elementes sicher vermieden werden.

Um darüber hinaus die Festigkeit der einzelnen Verbindungspunkte zu erhöhen, und um außerdem eine bessere Strömungsverteilung innerhalb der Matte zu erreichen, können die diskreten Verbindungsstellen auch unterschiedliche Größe aufweisen, wie das mit den Verbindungsstellen 16 gezeigt ist, die etwas größer als die Verbindungsstellen 8 sind.

Um bei einer Verwendung als Wärmetauscherelement, beispielsweise zur Übertragung der Wärme von einem flüssigen auf ein anderes flüssiges Medium, eine optimale Umspülung der Matte zu gewährleisten, kann das Wärmetauscherelement im Bereich der punktförmigen Verbindungsstellen 8 bzw. 16 mit durchgehenden Löchern 17 und 18 sowie an seinen Rändern mit Löchern 19 versehen sein. Dadurch kann das umgebende Wärmemedium leicht auch auf die andere Seite der Matte gelangen, wie das beispielsweise auch bei einer Verwendung des Wärmetauscherelementes in Frühbeeten von Gärtnereien erforderlich ist.

Ferner ist es möglich, das Wärmetauscherelement aus unterschiedlichen Materialien für Oberbahn 2 und Unterbahn 3 herzustellen. Wenn beispielsweise ein derartiges Element flach auf seiner Unterlage aufliegen und sich nur in seiner Oberlage 2 bei einer Füllung aufwölben soll, ist es zweckmäßig, wenn die Oberbahn 2 aus einem Material mit einer höheren Dehnbarkeit gewählt wird. Dabei kann es auch zweckmäßig sein, Ober-und Unterbahn unterschiedlich dick zu wählen.

Zur Erhöhung der Festigkeit der Verbindungsstellen, insbesondere an den außen umlaufenden Rändern 4 bis 7, ist es ferner vorteilhaft, wenn an der innenliegenden Kante dieser Ränder sogenannte Winkelbänder 13, wie sie aus Fig. 2 ersichtlich sind, eingeklebt werden, die eine zusätzliche Verbindung von Ober- und Unterbahn 2 bzw. 3 sicherstellen.

Darüber hinaus kann - um eine gleichmäßige Aufwölbung nach oben und nach unten durch eine entsprechend gezielte Flüssigkeitsverteilung zu erreichen - eine Zwischenlage 20 so in den Zwischenraum zwischen die Ränder und die diskreten Verbindungspunkte eingelegt werden, daß sich die Flüssigkeit gleichmäßig oberhalb und unterhalb der Zwischenlage verteilt.

Ein wesentlicher Vorteil dieser erfindungsgemäßen Wärmetauscherelemente besteht darin, daß sie wegen der direkten Verbindung von Ober- und Unterbahn an den Rändern und an mehreren Punkten ihrer Fläche sehr einfach, beispielsweise durch Nageln oder Schrauben mit der Unterlage verbunden werden können. Da einerseits durch die Herstellung aus flexiblem Material die Verbindungsstellen auch von außen leicht erkannt werden können, und andererseits an diesen Stellen direkt Material auf Material liegt, ist ein Durchbohren der Wärmetauscherelemente an diesen Stellen ohne Nachteil für die Funktionsfähigkeit, da dadurch keine Lecks im Strömungskreislauf geschaffen werden, durch die Wärmetauschermedium nach außen austreten kann. Damit ist also eine feste und einfache Verlegung sicher gewährleistet.

Zur Abdeckung größerer Flächen mit derartigen Wärmetauscherelementen, wie beispielsweise als Wärmetauscher für Sonnenkollektoren auf Dächern oder zur Fußbodenheizung, können - wie das aus der Prinzipskizze nach Fig. 3 ersichtlich ist - mehrere einzelne Wärmetauscherelemente 1 Stoß an Stoß miteinander verbunden werden, wobei gleichzeitig eine hydraulische Reihen- bzw. Parallelschaltung der Einzelelemente möglich ist. Nach dem dargestellten Ausführungsbeispiel in Fig. 3 sind dabei drei Wärmetauscherelemente 1A, 1B und 1C derart hintereinandergeschaltet, daß auch die einzelnen Durchbrüche 9 bzw. 10 den stirnseitigen Rändern 4 bzw. 6 unmittelbar fluchten, so daß eine einwandfreie Durchströmung aller hintereinandergeschalteten Elemente möglich ist. Selbstverständlich können derartige Wärmetauscherelemente nicht nur - wie in dem Ausführungsbeispiel gezeigt - in einer Reihe hintereinandergeschaltet werden, sondern es ist auch möglich, mehrere derartiger Reihen oder Einzelelemente parallel zu schalten, wobei dann zusätzliche Durchbrüche und hydraulische Verbindungen in den Längsrändern erforderlich sind.

Da die Einzelelemente aus flexiblem Material bestehen und daher auch insgesamt flexibel sind, können diese Elemente einerseits auch an gekrümmten bzw. abgewinkelten Flächen oder sogar als Rollen verlegt werden und bieten andererseits, beispielsweise bei einer Fußbodenheizung, einen zusätzlichen elastischen Dämpfungseffekt.

Patentansprüche

1. Wärmetauscherelement aus flexiblem Material mit einer Oberbahn und einer Unterbahn aus Kunststoff oder beschichtetem Gewebe, wobei Ober- und Unterbahn auf definierten Abstand zueinander fixiert sind, d a d u r c h   g e k e n n z e i c h n e t ,
daß Ober- und Unterbahn (2, 3) an ihren Rändern (4 ... 7) umlaufend und auf ihrer übrigen Fläche zumindest punktförmig (8; 16)
in vorgegebenen Abständen unmittelbar dauerhaft miteinander verbunden sind.

2. Wärmetauscherelement nach Anspruch 1, dadurch gekennzeichnet,
daß die punktförmigen Verbindungsstellen (8; 16) unterschiedlichen Durchmesser aufweisen.

3. Wärmetauscherelement nach Anspruch 1 oder 2, dadurch gekennzeichnet, daß die punktförmigen Verbindungsstellen (8; 16) in
parallelen Reihen (11, 12) nebeneinander und die Verbindungsstellen (8; 16) einer Reihe (11) versetzt zu der der nächsten Reihe
(12) angeordnet sind.

4. Wärmetauscherelement nach einem der Ansprüche 1 bis 3, dadurch gekennzeichnet, daß die Matte (1) an ihren Verbindungsrändern (4 ... 7) in vorgegebenen Abständen und an ihren punktförmigen Verbindugsstellen (8; 16) in ihrer Mitte durch Löcher (17,
18, 19) durchbrochen ist.

5. Wärmetauscherelement nach einem der Ansprüche 1 bis 4, dadurch gekennzeichnet, daß Ober- und Unterbahn (2, 3) aus unterschiedlichen Materialien bestehen.

6. Wärmetauscherelement nach Anspruch 5, dadurch gekennzeichnet,
daß die Oberbahn (2) aus einem Gewebe besteht, das eine höhere
Dehnbarkeit als die Unterbahn (3) aufweist.

7. Wärmetauscherelement nach Anspruch 1 bis 6, dadurch gekennzeichnet, daß Ober- und Unterbahn (2, 3) unterschiedliche Dicken
aufweisen.

(MK 411 E 80)

8. Wärmetauscherelement nach einem der Ansprüche 1 bis 7, aus gummibeschichtetem Gewebe, dadurch gekennzeichnet, daß Ober- und Unterbahn (2, 3) an den Verbindungsstellen (4 ... 7; 8; 16) durch Vulkanisation miteinander verbunden sind.

9. Wärmetauscherelement nach einem der Ansprüche 1 bis 8, dadurch gekennzeichnet, daß jedes Element (1) an den umlaufenden Rändern (4 ... 7) mindestens zwei offene Durchbrüche zum Anschluß von Zu- und Ableitungen (9, 10) für ein Wärmetauschermedium aufweist.

10. Wärmetauscherelement nach Anspruch 9, dadurch gekennzeichnet, daß die Durchbrüche (9, 10) auf jeweils gegenüberliegenden Stirnseiten (4, 6) des Elementes (1) angeordnet sind.

11. Wärmetauscherelement nach einem der Ansprüche 1 bis 10, dadurch gekennzeichnet, daß innenliegend zu den Verbindungsstellen (4 ... 7; 8; 16) Winkelbänder (13) mit der Ober- und Unterbahn (2, 3) verbunden sind.

12. Wärmetauscherelement nach einem der Ansprüche 1 bis 11, dadurch gekennzeichnet, daß zwischen Ober- und Unterbahn (2, 3) im Bereich zwischen den Verbindungsstellen (4 ... 7; 8; 16) Zwischenlagen (20) eingelegt sind.

13. Wärmetauscherelement nach einem der Ansprüche 1 bis 12, dadurch gekennzeichnet, daß die Oberseite (2) mit einem teppichartigen Flor beschichtet ist.

14. Wärmetauscherelement nach einem der Ansprüche 1 bis 13, dadurch gekennzeichnet, daß das Einzelelement derart auf seiner Unterlage befestigt ist, daß es seine Verbindungsstellen (4 ... 7; 8; 16) durchdringend angenagelt ist.

15. Wärmetauschermatte nach einem der Ansprüche 1 bis 14, dadurch gekennzeichnet, daß die Matte (15) aus mehreren Wärmetauscherelementen (1A, 1B, 1C) besteht, die Stoß an Stoß mechanisch und hydraulisch miteinander verbunden sind.

FIG.1

FIG.2

FIG.3

Europäisches
Patentamt

**EUROPÄISCHER RECHERCHENBERICHT**

Nummer der Anmeldung

EP 81 10 9570

| | EINSCHLÄGIGE DOKUMENTE | | KLASSIFIKATION DER ANMELDUNG (Int. Cl.⁴) |
|---|---|---|---|
| Kategorie | Kennzeichnung des Dokuments mit Angabe. soweit erforderlich, der maßgeblichen Teile | betrifft Anspruch | |
| | DE - A - 2 738 875 (MASCHINEN-FABRIK AUGSBURG-NÜRNBERG) | | F 24 D 3/00<br>F 28 F 21/06<br>F 24 J 3/02 |
| X | * Seite 9, letzter Absatz;<br>Figur 4 * | 1,2,3,<br>9 | |
| Y | | 4 | |
| | -- | | |
| | DE - A - 2 747 188 (VER METALL-WERKE RANSHOFEN-BERNDORF AG) | | RECHERCHIERTE SACHGEBIETE (Int. Cl.³) |
| X | * Seiten 3,4; Figuren * | 1,2,5,<br>6,7,9,<br>15 | |
| Y | | 4 | F 24 D<br>F 24 J |
| | -- | | |
| Y | GB - A - 1 434 974 (VARDEY) | | |
| | * Spalte 2, Zeilen 21-24;<br>Figur 3 * | 4 | |
| | -------- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 25-02-1982 | VAN GESTEL |

EPA form 1503.1  06.78